# EUROPEAN PATENT SPECIFICATION

(11) **EP 2 417 078 B1**
(45) Date of publication and mention of the grant of the patent: **30.03.2016**
(21) Application number: 10714673.0
(22) Date of filing: 19.01.2010
(51) Int. Cl.: C04B 26/16, C04B 40/00, C04B 111/00, C04B 28/02, C04B 28/10, C04B 111/28, C04B 111/52

(54) **METHOD FOR THE PRODUCTION OF BUILDING MATERIALS AND BUILDING PRODUCTS MANUFACTURED THEREBY**
VERFAHREN ZUR HERSTELLUNG VON BAUSTOFFEN UND DANACH HERGESTELLTE BAUSTOFFE
PROCÉDÉ DE FABRICATION DE MATÉRIAUX DE CONSTRUCTION ET PRODUITS DE CONSTRUCTION FABRIQUÉS AINSI

(30) Priority: 19.01.2009 HU 0900026
(43) Date of publication of application: 15.02.2012
(73) Proprietor: Redice Holdings Ltd., Nicosia (CY)
(72) Inventor: KOMLÓDI, Ferenc, H-2030 Erd (HU); FLÖSSER, István, H-2800 Tatabánya (HU); HOFFER, József, H-5700 Gyula (HU); MÓCZÁNÉ SZÜCS, Ildikó, H-6000 Kecskemét (HU); NYÍR , Laszló, H-2094 Nagykovácsi (HU); SZABÓ, Tamás, H-2230 Gyömrö (HU); SZÖLLÖSI, Gábor, H-1046 Budapest (HU)
(74) Representative: Gödölle, Istvan
(86) International application number: PCT/HU2010/000008
(87) International publication number: WO 2010/082073

(56) References cited:
- EP-A1- 0 924 173
- EP-A2- 1 840 099
- WO-A1-2006/037187
- HU-A2- 207 694
- KR-A- 20030 094 130

## Description

### FIELD OF THE INVENTION

The invention relates to a method for the production of an additive, a binder comprising an additive, and building materials, as well as to heat-insulating plaster, lightweight concrete, building elements and auxiliary construction elements, manufactured by the method.

### BACKGROUND ART

Wall elements generally used in the construction industry are only able to meet the desirable heat insulation specifications laid down in respective provisions of the law if they are subsequently fitted with external and/or internal insulation. There are materials which are known to be suitable for making new structures and heat insulation for existing buildings and structures.

Such a solution is described in patent document HU 213 905, the subject matter of which is a method for manufacturing lightweight concrete additives and lightweight concrete. The additive is made by wetting foamed plastic particles with water or water-glass, followed by mixing with powdered cement. The additive is used in making lightweight concrete, paving, wall elements and levelling and/or heat-insulating layers.

In patent document EP 1 508 552 B2 a construction product is described which comprises woodwool chips and latent heat accumulator elements, the latter improving the heat-storage capacity of the product.

According to patent document HU 224 364, in producing concrete or plaster, an additive of vegetable origin and a finely ground mineralizing material are added together to binding material and blending water.

In patent document KR 20030093415 a lightweight concrete is described which includes not only cement, but also an additive consisting of a foaming agent of animal or vegetable origin, a semi-hard elastomer foam, a rubber component and a fibrous material component.

The patent document GB 2 175 294 describes a method for producing a heat-insulating concrete element, where after pre-wetting aimed at improving the binding, a fibrous vegetable based material, particularly rice hull, is added to water and to binding material as for example cement or gypsum.

According to patent document HU 207 694 B, powdered lime with water-repellent surface is produced so that powdered quicklime is treated with an emulsion of linseed oil and denatured alcohol. By mixing cement with such powdered lime a cement mixture free from shrinkage can be obtained. Based on the powdered lime, impermeable cement mortar can be made by adding cement, sand and water.

In patent document EP 1 840 099 a water-repellent powdered lime is disclosed which is produced by mixing vegetable oil, detergent and quicklime. From the powdered lime so treated, a water-repellent material is made by adding water in order to produce water-insulating building materials.

In Hungarian patent publication P 99 00531 a water-repellent product is disclosed which can be used as an additive for building material, said product consisting of powdered quicklime and vegetable oil. The product is used for making impermeable concrete or plaster.

In patent document KR20030094130 A a reinforced gypsum board is described which is produced by mixing and stirring calcined gypsum, glass fiber, and a small amount of a foaming agent, preferably sodium bicarbonate, with water to obtain a slurry, then the slurry is solidified in a mould to form a gypsum board of a particular shape.

Patent document EP 0 924 173 A1 describes a substantially cylindrical expanded polystyrene bead with a diameter of about 2 to 5 mm and a length of about 4 to 10 mm, and a concrete mix comprising cement and a plurality of such beads as an aggregate. The mix may further comprise water and mineral aggregate.

In document WO 2006/037187 A1 a cemetitious mixture comprising a lightweight material, cement, resin, sand, fibrous material and water is disclosed. The lightweight material may be recycled expanded polystyrene foam. A lightweight concrete building material can be formulated from the cemetitious mixture.

### SUMMARY OF THE INVENTION

The object of the present invention is to provide a multipurpose building material which can be used both in the construction industry and in associated industrial branches as wall element, space delimitation element, plaster, filling and covering material, both in building of new structures and in restoring of already existing buildings, or as self-contained structure, which material offers a cost-effective and simple solution, having good heat insulation, fire resistance, water and sound insulation characteristics, as well as excellent vapour diffusion resistance and adhesive strength. With the invention, it was an aim to provide these benefits jointly if possible, by improving cost-effectiveness and diversification of production and application.

Thus, the invention is a method for the production of an additive for building materials, wherein a hydrophobization agent is mixed with a solvent and the resulting emulsion is applied to quicklime, then the material obtained is hydrated by adding water, wherein the hydrophobization agent is an oil having a dry matter content of 3 to 50 % by weight, the quicklime in a quantity of 60 to 96 % by weight is soaked with a quantity of 4 to 40 % by weight of the mixture of the oil and the solvent, and after drying of the hydrated material a foaming agent is admixed thereto in a quantity of 0.25 to 0.6 part by weight of the foaming agent, preferably sodium bicarbonate, to one part by weight of the hydrated material.

According to a preferred embodiment of the method, the hydrophobization agent is a vegetable oil, preferably linseed oil, preferably having a vegetable dry matter content of 28 to 38 % by weight. Instead of linseed oil, sunflower oil or rapeseed oil may also be used. As a solvent, denatured alcohol or acetone can be applied. Mixing is carried out by introducing air, preferably into an enclosed box mixer, until an emulsion is obtained. The solvent is intended to facilitate the absorption of the hydrophobization agent in the quicklime.

It is advantageous if the quicklime in a quantity of 75 to 90 % by weight is soaked with a quantity of 10 to 25 % by weight of the mixture of the oil and the solvent, and sodium bicarbonate is used as a foaming agent in a quantity of 0.3 to 0.4 part by weight to one part by weight of the hydrated material. Ammonium acid carbonate may also be used as a foaming agent.

Preferably, the application of the emulsion to the quicklime can be performed by spraying atomized emulsion onto coarse quicklime moving along on a conveyor belt.

The hydration may be carried out preferably in a way that after evaporation of most of the solvent, the quicklime soaked with the emulsion is expanded to a volume 1.2 to 1.8 times larger, preferably 1.4 to 1.6 times larger, by adding water. The hydration can be performed in a hydration chamber, as a result of which a very fine, butter coloured, highly hydrophobic lime hydrate powder with a grain size of approximately 2µm is obtained.

The invention also relates to a method for the production of a binder for building materials, said binder comprising an additive produced according to the invention, wherein a hydraulic binding component and/or an isocyanate based binding component are/is admixed to the additive in a quantity of 4.8 to 14.8 parts by weight of the binding component to one part by weight of the additive.

It is advantageous to use cement as the hydraulic binding component in a quantity of 6.7 to 11.1 parts by weight of the cement to one part by weight of the additive. In addition to, or instead of, cement an isocyanate based binding component may also be used to make the binding faster and the building material harder.

In this method, the admixing of the foaming agent in the course of producing the additive and the admixing of the binding component when producing the binder comprising an additive, represent two consecutive technological steps. This is a preferred approach, if the additive and the binder comprising an additive are produced at two different places, and it would be preferable to produce the binder comprising an additive at the place of its use because a much bigger quantity of binding component is required for the production.

The invention is furthermore a method for the production of a binder for building materials, said binder comprising an additive, wherein a hydrophobization agent is mixed with a solvent and the resulting emulsion is applied to quicklime, then the material obtained is hydrated by adding water, wherein the hydrophobization agent is an oil having a dry matter content of 3 to 50 % by weight, the quicklime in a quantity of 60 to 96 % by weight is soaked with a quantity of 4 to 40 % by weight of the mixture of the oil and the solvent, and after drying of the hydrated material a foaming agent and a hydraulic binding component and/or an isocyanate based binding component are admixed thereto in a quantity of 0.25 to 0.6 part by weight of the foaming agent, preferably sodium bicarbonate, and in a quantity of 6.5 to 20 parts by weight of the binding component to one part by weight of the hydrated material.

It is advantageous to use cement as the hydraulic binding component in a quantity of 9 to 15 parts by weight of the cement to one part by weight of the hydrated material. In this case it is preferable if the foaming agent and the binding component are admixed to the hydrated material in one step by dry mixing, in the course of which the materials are blended by mechanical and/or air injection method.

The invention also relates to a method for the production of a building material by using a binder comprising an additive, said binder being produced according to the invention, wherein an expansion material is added to the binder comprising an additive in a proportion of 2 to 12 units by volume of the expansion material to one unit by volume of the binder comprising an additive, and the material obtained is mixed with added water to a homogenous consistency, then left or made to solidify.

The expansion material may be an organic or inorganic filler not involved in chemical reaction with the binder comprising an additive, said filler being a fibrous and/or granular paper, straw, cellulose or rubber material, or a plastic, for example shavings of plastic wastes, or a mixture thereof. Mineralized vegetable matter, cork shavings as industrial waste, straw grass and cherry pit may also be used as expansion material. The mineralization is a process for preventing decomposition of organic materials.

It is preferable to use polystyrene beads as expansion material in a proportion of 4 to 6 units by volume of the polystyrene beads to one unit by volume of the binder comprising an additive.

The expansion material, as it is known, is instrumental in increasing the heat-insulating ability of the building material produced. In the invention, as a result of the hydrophobic additive, when the expansion material and the binder are mixed with added water, the expansion material is soaked with the hydrophobization agent and this results in the fact that any vapour eventually condensing in the installed heat-insulating building material can escape easier from the building material, and hence the heat insulation capacity of the building material is not compromised.

In addition to the expansion material, other quality improving and/or colouring additives can also be added. This additive can be, for example, a bond accelerator or an anti-freeze agent. By the application of colouring additives, insulation structures of the invention which having different parameters can be distinguished by the application of different colouring additives, and it is possible to produce building materials meeting aesthetic expectations.

As a quality improving additive, an alkali-silicate material, preferably sodium silicate, can be added for increasing the hardness of the produced building material. It may also be advantageous to add calcium chloride because on the one hand it accelerates the binding of the cement, and on the other it improves the heat insulation capacity and the vapour diffusion resistance factor.

As a quality improving additive, for increasing the strength of the product and for reinforcing its surface, a fibrous material made of metal, glass, plastic and/or organic or inorganic waste, and/or a net made of such a material, may be applied.

The material prepared by the method according to the invention is used as a flowing building material and/or as a solid building material. In the former case, the produced flowing building material is cast into a predetermined mould and left or made to solidify at a temperature of 22 to 80°C, preferably 40 to 50°C.

As a result of its material composition and structure, the building material according to the invention has a high degree of fire resistance. On the one hand, this means that it is incombustible and transfers heat to a limited extent only even under the impact of fierce fire, and on the other, that after the ceasing of a fire, the temperature of the building material returns to ambient temperature within minutes, and furthermore that it retains its strength to a great extent even after a fire incident.

The solid building material made by the method according to the invention can be applied as a structural material for constructions or as a heat-insulating, sound-insulating and fire-resistant material, or as a setf-contained structural element for the use in the fields of architectural and civil engineering.

The building material made by the method according to the invention can be used as a wall element and/or a basing and/or a floor, and/or as an insulation on these structures, and/or as an external heat and sound insulation, and/or for making structures fire-resistant or fire-sealing. It is also suitable for use as an insulation element for other systems, structures, equipment, conduits, reservoirs, pipes and pools.

The building material produced by the method according to the invention may also be used for filling up, insulating, or increasing the insulation rate of various structures and/or metal, plastic and other material based profiles and pipes, or making them fire-sealing.

It is also possible that in constructing buildings the produced building material is used together with a supporting structure made of hot dip galvanized steel, iron, wood or reinforced concrete, or another material, or the produced building material can be used as a self-contained sound-insulating, fire-sealing structure, and/or together with other such structures. The pH rate of the building material according to the invention is about 12, which is a substantial advantage from the aspect of anticorrosion protection of associated iron structures.

A whole building using the building material according to the invention can be made in a way that a formwork is secured to a steel structure with permanent spacers made of the building material according to the invention, and the flowing building material according to the invention is cast into the formwork, for example from a truck mixer. Thus, after solidification the building material according to the invention constitutes a homogenous structure with the spacer elements made of the same material, and this is especially advantageous from the aspect of heat insulation.

The building material made by the method according to the invention can be fixed by plugs and/or anchors, clamps and/or adhesion coat or other adhesive.

The flowing building material made by the method according to the invention, for example a plaster, can be worked in mechanically, for example by a plastering machine or a concrete pump, and/or manually. Preferably, the produced building material has a density of mass of 80 to 900 kg/m³.

The subject matter of the invention is furthermore a heat-insulating plaster and lightweight concrete, made of a building material produced by the method according to the invention.

Further subject matters of the invention are a heat-insulating building element, for example prefabricated panel, sandwich panel, fire-retardant wall, and a heat-insulating auxiliary construction element, for example permanent formwork spacer, insulating coating for pipelines, door panel, window profile frame, curtain wall profile, window-jamb element, which are made of a building material produced by the method according to the invention.

The building material according to the invention is suitable for mass production of buildings with reduced energy demand or corresponding to 'passive house' requirements, for example with a modular panel structure.

The building material according to the invention can be applied in the following fields:
- structural construction and insulation of industrial and agricultural buildings, residential buildings and halls;
- external, internal, gap and space filling, fireproof and sound-insulating wall elements;
- in all types of layered building structures;
- in structures made of prefabricated elements and/or panels;
- external plaster;
- internal plaster (insulation and fire protection of historic buildings);
- making and heat/fire-protecting insulation of any flat, ribbed and slanted floors;
- making and insulating bases (also soundproof);
- making and insulating attics;
- insulations behind heavy covers, wood, metal and other covering materials;
- insulation of high and low temperature industrial spaces and establishments;
- insulation of panel buildings;
- fire protection solutions (e.g. walls, structures);
- insulation of district heating and other pipelines;
- sound insulation, sound-proofing (e.g. walls, doors, structures);
- insulation for pools;
- insulation for tanks and reservoirs;
- insulation of profiles by filling for doors and windows, and of profiles of plastic, aluminium and other materials (no burning off during cutting and welding);
- other applications in the industry, building and construction, in which the building material is used without any modifications.

The fields of industrial application of the building material according to the invention can be classified into the following groups:
- By using the building material according to the invention, a complete building (base, wall, floor, roof) without heat bridges can be cast or produced, together with load bearing structure, for example in a modular panel system.
- It can be applied as a plaster and as an insulation material for vertical, slanted and horizontal surfaces.
- It can be used as a self-contained structure, e.g. sound-insulating and fireproof wall, or as a preformed and strengthened heat-insulating element.
- It can be used as a heat- and sound-insulating and fireproof coating for other products and systems (e.g. pipes and reservoirs).

The advantage of the building material according to the invention vis-à-vis prior art building materials is that through its application valuable time and costs can be saved, while the heat and sound insulation, plus fire resistance characteristics are much better. We have created a building material which can be applied and used in both the construction industry and the associated industrial sectors, in which said building material can be used as a wall element, a building delimitation element, plaster, filling and covering material, in construction of new buildings or in restoring of existing buildings or as a self-contained structure. It has a good heat insulation (A = 0.1-0.032 W/mK), fire resistance (grade A2), water and sound insulation characteristics, excellent vapour diffusion resistance factor (µ < 15) and adhesive strength rate, thus, offering a cost efficient and simple solution.

By using this building material, the heat bridges can be totally eliminated, and because it lends itself to casting, this material provides a perfect solution in the case of all slots, gaps and surface imperfections.

The application of the building material according to the invention may also revolutionize the door and window making industry, because by its use manufacturers can return to making much cheaper one-chamber or two-chamber profiles, while the heat insulation rate of the profiles is even below the rate of 0.8 W/mK required for a passive house. The limitation so far has been that the profile filling materials improving the insulation rate were burnt out of the profiles at the welding points during the manufacturing of the doors and windows, and therefore substantial heat bridges developed at the corners.

Contrary to insulation materials used so far, the building material according to the invention is resistant against insects and rodents, and therefore infestation can be avoided. As a result of a certain degree of flexibility, when the building material is used together with a metal structure, the buildings so constructed are highly resistant to earthquakes. The building material according to the invention has a favourable shock resistance, too.

The building material according to the invention provides protection against a prolonged cooling of the building and, due to its thermal inertia, also against its heat-up. Therefore, it can be used especially well under hot climate conditions.

### BRIEF DESCRIPTION OF THE DRAWING

The invention will be described hereinafter on the basis of drawing and examples, where
Fig. 1 shows an application of the building material according to the invention for heat insulation,
Fig. 2 shows the use of the building material according to the invention as a permanent formwork spacer,
Fig. 3 shows a detail of a heat-insulating pipeline coating made of the building material according to the invention, and
Fig. 4 shows a detail of a sandwich panel manufactured by using the building material according to the invention.

### DESCRIPTION OF PREFERRED EMBODIMENTS OF THE INVENTION

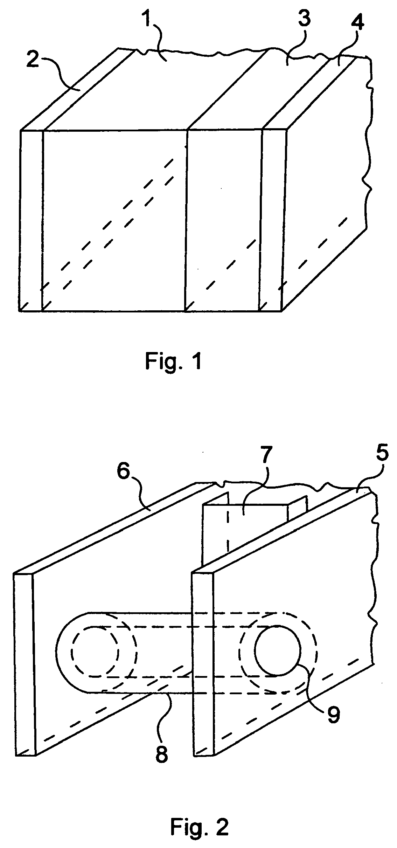

In Fig. 1, there is an inner plaster 2 on the inner side of a wall element 1, for example made of YTONG material, and a heat-insulating layer 3 made of the building material according to the invention is fixed to the outer side of the wall element 1. An outer coat of plaster 4 is applied to the heat-insulating layer 3 on its surface opposite to the wall element 1.

In Fig. 2, a hot dip galvanized steel support 7 is shown between formwork panels 5 and 6. The spacing between the formwork panels 5 and 6 is provided by permanent spacers. In the figure only one spacer 8 having a bore 9 is shown. The spacer 8 is made of a heat-insulating building material of suitable strength according to the invention. The bore 9 houses a clamping bolt not shown in the figure. A flowing building material according to the invention is cast between the formwork panels 5 and 6. After solidification, the bolts are unscrewed, the formwork panels 5 and 6 are removed, and the bores are filled up with the same building material according to the invention. Therefore, the cast building material, the permanent spacers and the building material filling up the bores constitute a homogeneous structure made of the heat-insulating building material according to the invention. This is advantageous from the aspect of heat insulation, because no heat bridges can be formed.

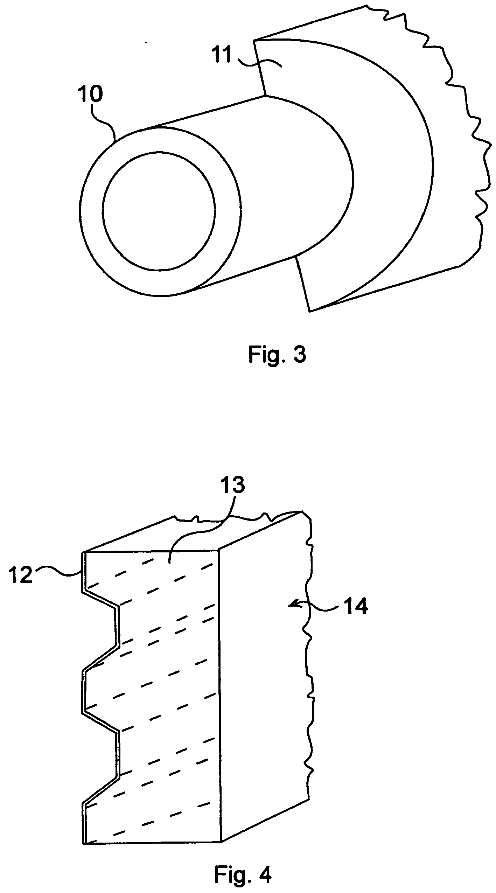

Fig. 3 shows a detail of a heat-insulating coating 11 for a pipeline 10, which coating 11 has a cylinder jacket shape and is made of the heat-insulating building material according to the invention. The other half of the heat-insulating coating 11 is not shown in the figure.

Fig. 4 shows a detail of a sandwich panel 14 consisting of a trapezoid metal plate 12 and a heat-insulating layer 13 applied to one side thereof. The heat-insulating layer 13 is made of the building material according to the invention. The sandwich panel 14 may be used as a delimitation wall of a building. It can be fixed to a metal structure by means of bolts, not shown in the figure, passing through the heat-insulating layer 13 and the metal plate 12.

The method according to the invention will be further described by way of examples as follows.

### Example 1

1 litre of hydrophobic linseed oil of a high dry matter content is blended in an enclosed vessel with 0.1 litre of denatured alcohol until an emulsion solution is obtained, then 9 to 10 kg of coarse quicklime is soaked with the emulsion solution. After the evaporation of the denatured alcohol facilitating the soaking of the quicklime with the linseed oil, which evaporation takes place in a few minutes, the material is expanded to about one and a half times of its original volume by continuous addition of water (hydration). The hydrated product so obtained will have a weight of approximately 11 to 12 kg.

This specific lime hydrate contributes to the fire resistance of the produced building material and is beneficial to the adhesive strength of the building material. It is important to make sure that during hydration the emulsion solution having a high dry matter content soaks the quicklime uniformly and the hydration is carried out perfectly without burning.

Thereafter, 4 kg of sodium bicarbonate is admixed as a foaming agent to approximately 11 to 12 kg of lime hydrate. The foaming agent contributes to the high heat insulation rate of the produced building material, its fire and heat resistance, and the workability of the material. The hydrophobic material so obtained can be used as an additive. It can be used very advantageously for the production of a building material with high heat insulation capacity.

Then, 125 kg of 42.5 R cement are admixed as hydraulic binding component to the additive in order to obtain a binder comprising an additive. If instead of cement, an isocyanate based binding component is used partly or fully, the strength of the produced building material will be higher and its sound insulation can also be changed. The quality of cement may influence the solidification period and also the heat engineering characteristics of the building material. This is the production step where it is the easiest to adjust the characteristics of the building material to the intended mode of application.

As an expansion material, 1000 litres of expanded polystyrene (polystyrene grits or polystyrene beads) are added to the obtained powdered binder comprising an additive, and blended to a uniform consistency with 140 to 160 litres of water for a period of at least 15 minutes. The blending may take place in a conventional concrete mixer or in a truck mixer. Various other additives may also be added (e.g. quality improver, bond accelerator, anti-freeze agent, colouring agent). The expanded polystyrene is soaked with the hydrophobic additive in the binder and, therefore, in the case of vapour condensation in the heat-insulating building material obtained after solidification, the vapour is less likely to ingress the polystyrene material. This largely contributes to the fact that the built-in building material of the invention retains its excellent heat insulation characteristics for a longer period. The expanded polystyrene material can be replaced for example by mineralized organic materials (straw, cork). In this case a modification of the heat insulation rate must be taken into consideration. The building material obtained has a volume of approximately 1 m³ and its weight after full solidification is between 194 kg and 198 kg.

The technical characteristics of the heat-insulating plaster made for facades according to Example 1 are shown in Table 1.

**Table 1**

| Density of mass | individual rate: 194 to 198 kg/m³ average: 196 kg/m³ | MSZ EN 1015-10:2000 |
|---|---|---|
| Thermal conductivity at an average temperature of 10 °C | A = 0.055 W/mK | MSZ EN 12667:2001 |
| Vapour diffusion resistance factor | µₐᵥ = 4.59; S_{d} = 0.159 m | MSZ EN 1015-19:2000 |
| Capillary water absorption | C = 0.40 kg/(m²×min^{0.5}) | MSZ EN 1015-18:2003 |
| Compression strength (at the age of 28 days) | individual: 9.57 to 9.78 N/mm² average: 9.68 N/mm² | MSZ EN 1015-11:2000 |
| Adhesive strength on untreated concrete surface | average: 0.02 N/mm² (FP: A) | MSZ EN 1015-12:2000 |
| Adhesive strength on washed concrete surface | average: 0.02 N/mm² (FP: A) | |
| Binding strength (at the age of 28 days) | individual: 2.11-2.23 N/mm² average: 2.17 N/mm² | MSZ EN 1015-11:2000 |
| Fire protection classification The material itself | A2-s1, d0 | MSZ EN 13501-1:2007 |
| | | MSZ EN 13823:2002 |
| Fire protection classification | When used in a system with a finishing coat classified into fire protection grade "A2", it falls into the fire protection grade A2-s1, d0. | MSZ EN 13501-1:2007 |
| As a heat insulation system | | MSZ EN 13823:2002 |
| | With a finishing coat classified into fire protection grade "B", it falls into the fire protection grade B-s1, d0. | MSZ EN ISO 11925-2:2002 |
| Spread of fire limit on facade | Tₕ > 45 minutes | Chapter I/3 of Annex 5 of Decree No. 2/2002 (I.23.) BM MSZ 14800-6:1980 Paragraph 3.6.9.1 of Annex M1, Chapter I/4 of Part 5 of Decree No. 9/2008 (II.22.) ÖTM |
| Air content (V/V%) | 16% | MSZ EN 1015-7:1999 |
| Workability period | 1 hour 45 minutes | MSZ EN 1015-9:2000 |
| Durability (decrease after 25 freezing- thawing cycles) | -4.9% (bending strength) | ÉMI HSZ 66:2005 |
| | -0% (compression strength) | |

### Example 2

The production method is identical with that described in Example 1, but in this case the volume of the added cement is 25% higher, i.e. approximately 156 kg. The building material obtained has a volume of approximately 1 m³ and its weight after full solidification is between 281 kg and 323 kg. The technical characteristics of the heat-insulating plaster made for facades according to Example 2 are shown in Table 2.

**Table 2**

| | | |
|---|---|---|
| Density of mass | individual rate: 281 to 323 kg/m³ | MSZ EN 1015-10:2000 |
| | average: 298 kg/m³ | |
| Thermal conductivity at an average temperature of 10 °C | λ = 0.067 W/mK | MSZ EN 12667:2001 |
| Vapour diffusion resistance factor | µₐᵥ = 4.59; S_{d} = 0.159 m | MSZ EN 1015-19:2000 |
| Capillary water absorption | C = 0.40 kg/(m²·min^{0.5}) | MSZ EN 1015-18:2003 |
| Compression strength (at the age of 28 days) | individual: 4.25 to 4.31 N/mm² average: 4.30 N/mm² | MSZ EN 1015-11:2000 |
| Adhesive strength on untreated concrete surface | average: 0.07 N/mm² (FP: B) | MSZ EN 1015-12:2000 |
| Adhesive strength on washed concrete surface | average: 0.03 N/mm² (FP: A) | |
| Bending strength (at the age of 28 days) | individual: 0.16-0.18 N/mm² average: 0.17 N/mm² | MSZ EN 1015-11:2000 |
| Fire protection classification | | MSZ EN 13501-1:2007 |
| The material itself | A2-s1, d0 | MSZ EN 13823:2002 |
| Fire protection classification As a heat insulation system | When used in a system with a finishing coat classified into fire protection grade "A2", it falls into the fire protection grade A2-s1, d0. | MSZ EN 13501-1:2007 |
| | | MSZ EN 13823:2002 |
| | | MSZ EN ISO 11925-2:2002 |
| | With a finishing coat classified into fire protection grade "B", it falls into the fire protection grade B-s1, d0. | |
| Spread of fire limit on facade | Tₕ ≥ 45 minutes | Chapter I/3 of Annex 5 of Decree No. 2/2002 (I.23.) BM MSZ 14800-6:1980 Paragraph 3.6.9.1 of Annex M1, Chapter I/4 of Part 5 of Decree No. 9/2008 (II.22.) ÖTM |
| Air content (VN%) | 15% | MSZ EN 1015-7:1999 |
| Workability period | 1 hour 45 minutes | MSZ EN 1015-9:2000 |
| Durability (decrease after 25 freezing- thawing cycles) | -15.8% (bending strength) | |
| | -5.4% (compression strength) | ÉMI HSZ 66:2005 |

### Example 3

The production method is identical with that described in Example 1, but in this case at the time of wet mixing (final mixing), a glass fibre filament is also added in addition to the expanded polystyrene material to the binder comprising an additive, for example in a quantity of 1 to 2 kg. In this way the strength of the building material obtained is further increased. The so produced flowing material cannot be applied to a surface by a horizontal screw plastering machine, because the feeding screw may be blocked up by the fibres picked up.

### Example 4

The production method is identical with that described in Example 1, but in the course of an application as a heat insulation for facades, in the outer third of the thickness of heat-insulating plaster according to the invention and applied to the wall, a glass fibre net (e.g. of 80 to 160 g) is fitted on the whole surface. This method of application is primarily advantageous in subsequent heat insulation of prefabricated panel buildings, because an eventual cracking of gaps between the panels can be avoided.

### Example 5

The production method is identical with that described in Example 1, with the difference that instead of expanded polystyrene material, an identical quantity of cork grits is used. The heat engineering characteristics of the produced building material, due to heat engineering characteristics of the cork, are slightly modified, and its density is increased approximately one and a half times. This embodiment is primarily suitable for heat insulation in extremely cold areas.

## Claims

1. A method for the production of a building material, wherein a vegetable oil having a dry matter content of 3 to 50 % by weight is mixed with a solvent and the resulting emulsion is applied to quicklime, then hydrated by adding water to the quicklime soaked with the emulsion, and admixing a binding component thereto, the method comprising the steps of:
- soaking the quicklime in a quantity of 60 to 96 % by weight with a quantity of 4 to 40 % by weight of the emulsion,
- expanding the quicklime soaked with the emulsion after evaporation of most of the solvent to a volume 1.2 to 1.8 times larger, preferably 1.4 to 1.6 times larger, by adding the water for preparation of the hydrated material,
- admixing to the hydrated material after drying a foaming agent, preferably sodium bicarbonate, in a quantity of 0.25 to 0.6 part by weight to one part by weight of the hydrated material,
- admixing cement as the binding component in a quantity of 6.7 to 11.1 parts by weight of the cement to one part by weight of the hydrated material and the foaming agent for preparation of a binder,
- adding an expansion material to the binder in a proportion of 2 to 12 units by volume of the expansion material to one unit by volume of the binder, and
- mixing the material obtained with further water to a homogenous consistency, then left or made to solidify.

2. The method according to claim 1, wherein the vegetable oil is linseed oil having a vegetable dry matter content of 28 to 38 % by weight and the solvent is denatured alcohol or acetone.

3. The method according to claim 1 or claim 2, wherein the quicklime in a quantity of 75 to 90 % by weight is soaked with a quantity of 10 to 25 % by weight of the emulsion.

4. The method according to any of claims 1 to 3, wherein sodium bicarbonate is used as a foaming agent in a quantity of 0.3 to 0.4 part by weight to one part by weight of the hydrated material.

5. The method according to any of claims 1 to 4, wherein the emulsion is applied to the quicklime by spraying atomized emulsion onto coarse quicklime moving along on a conveyor belt.

6. The method according to claim 1, wherein the foaming agent and the binding component are admixed to the hydrated material in two consecutive steps, first the foaming agent is admixed, then the binding component.

7. The method according to claim 1, wherein the expansion material is an organic or inorganic filler not involved in chemical reaction with the binder, said filler being a fibrous and/or granular paper, straw, cellulose or rubber material, or a plastic, or a mixture thereof.

8. The method according to claim 7, wherein the expansion material consists of polystyrene beads which are added in a proportion of 4 to 6 units by volume of the polystyrene beads to one unit by volume of the binder.

9. The method according to claim 1, wherein the obtained material mixed with said further water is cast into a predetermined mould, and left or made to solidify at a temperature of 22 to 80 °C, preferably 40 to 50 °C.

10. The method according to claim 1, wherein the solidified building material has a density of mass of 80 to 900 kg/m³.

11. A heat-insulating plaster, which is made of a building material produced by the method according to claim 1.

12. A heat-insulating lightweight concrete, which is made of a building material produced by the method according to claim 1.

13. A heat-insulating building element or auxiliary construction element, which is made of a building material produced by the method according to claim 9.

## Patentansprüche

1. Verfahren zur Herstellung eines Bauwerkstoffs, wobei ein einen Trockenmassegehalt von 3 bis 50 Gewichtsprozent aufweisendes Pflanzenöl mit einem Lösungsmittel gemischt wird und die sich ergebende Emulsion auf gebrannten Kalk angewendet wird, dann durch Zugabe von Wasser zu dem von der Emulsion durchtränkten gebrannten Kalk hydratisiert wird und eine Bindungskomponente beigemischt wird, wobei das Verfahren die Schritte aufweist:
- Durchtränken einer Menge von 60 bis 96 Gewichtsprozent des gebrannten Kalks mit einer Menge 4 bis 40 Gewichtsprozent der Emulsion,
- Volumenvergrößerung des mit der Emulsion durchtränkten gebrannten Kalks nach Verdampfen des Großteils des Lösungsmittels durch Zugabe des Wassers zur Herstellung des hydratisierten Werkstoffs auf ein 1,2 bis 1,8 mal größeres Volumen, vorzugsweise auf ein 1,4 bis 1,8 mal größeres Volumen,
- Beimischung eines Schaumbildners, vorzugsweise Natriumhydrogenkarbonat, zu dem hydratisierten Werkstoff nach dem Trocknen in einer Menge von 0,25 bis 0;6 Gewichtsanteilen zu einem Gewichtsanteil des hydratisierten Werkstoffs,
- Beimischung von Zement als die Bindungskomponente in einer Menge von 6,7 bis 11,1 Gewichtsanteilen des Zements zu einem Gewichtsanteil des hydratisierten Werkstoffs und des Schaumbildners zur Zubereitung eines Bindemittels,
- Zugabe eines Expansionswerkstoffs zu dem Bindemittel in einem Verhältnis von 2 bis 12 Volumeneinheiten des Expansionswerkstoffs zu einer Volumeneinheit des Bindemittels, und
- Vermischen des erhaltenen Werkstoffs mit weiterem Wasser zu einer homogenen Konsistenz, dann der Verfestigung überlassen oder diese bewirken.

2. Verfahren nach Anspruch 1, wobei das Pflanzenöl Leinöl mit einem pflanzlichen Trockenmassegehalt von 28 bis 38 Gewichtsprozent ist, und das Lösungsmittel denaturierter Alkohol oder Aceton ist.

3. Verfahren nach Anspruch 1 oder Anspruch 2, wobei eine Menge von 75 bis 90 Gewichtsprozent des gebrannten Kalks mit einer Menge von 10 bis 25 Gewichtsprozent Emulsion durchtränkt wird.

4. Verfahren nach einem der Ansprüche 1 bis 3, wobei Natriumhydrogenkarbonat in einer Menge von 0,3 bis 0,4 Gewichtsanteilen zu einem Gewichtsanteil des hydratisierten Werkstoffs als Schaummittel verwendet wird.

5. Verfahren nach einem der Ansprüche 1 bis 4, wobei die Emulsion durch Aufsprühen von zerstäubter Emulsion auf groben gebrannten Kalk, der sich entlang eines Förderbands bewegt, auf den gebrannten Kalk angewendet wird.

6. Verfahren nach Anspruch 1, wobei der Schaumbildner und die Bindungskomponente dem hydratisierten Werkstoff in zwei aufeinanderfolgenden Schritten, zuerst das Schaummittel und dann die Bindungskomponente, beigemischt werden.

7. Verfahren nach Anspruch 1, wobei der Expansionswerkstoff ein nicht an der chemischen Reaktion mit dem Bindemittel beteiligter organischer oder anorganischer Füllstoff ist, wobei der Füllstoff ein fasriger und/oder ein granulärer Papier-,Stroh-, Zellulose- oder Gummiwerkstoff ist, oder ein Kunststoff oder eine Mischung davon ist.

8. Verfahren nach Anspruch 7, wobei der Expansionswerkstoff aus Styroporkugeln besteht, die in einem Verhältnis von 4 bis 6 Volumeneinheiten der Styroporkugeln zu einer Volumeneinheit des Bindemittels zugefügt sind.

9. Verfahren nach Anspruch 1, wobei der erhaltene Werkstoff, der mit dem weiteren Wasser vermischt ist, in eine vorgegebene Form gegossen wird und bei einer Temperatur von 22 bis 80°C, vorzugsweise 40 bis 50°C der Verfestigung überlassen wird oder diese bewirkt wird.

10. Verfahren nach Anspruch 1, wobei der verfestigte Bauwerkstoff eine Massendichte von 80 bis 900 kg/m³ aufweist.

11. Wärmedämmender Putz, der aus einem durch das Verfahren gemäß Anspruch 1 erzeugten Bauwerkstoff hergestellt ist.

12. Wärmedämmender Leichtbeton, der aus einem durch das Verfahren gemäß Anspruch 1 erzeugten Bauwerkstoff hergestellt ist.

13. Wärmedämmendes Bauelement oder zusätzliches Konstruktionselement, das aus einem durch das Verfahren gemäß Anspruch 9 erzeugten Bauwerkstoff hergestellt ist.

## Revendications

1. Procédé pour la production d'un matériau de construction, dans lequel une huile végétale ayant une teneur en matière sèche de 3 à 50 % en poids est mélangée avec un solvant et l'émulsion résultante est appliquée à de la chaux vive, puis hydratée en ajoutant de l'eau à la chaux vive trempée avec l'émulsion, et en mélangeant par ajout un composant de liaison à celle-ci, le procédé comprenant les étapes de :
- tremper la chaux vive en une quantité de 60 à 96 % en poids avec une quantité de 4 à 40 % en poids de l'émulsion,
- faire expanser la chaux vive trempée avec l'émulsion après évaporation de la plupart du solvant jusqu'à un volume 1,2 à 1,8 fois plus grand, de préférence 1,4 à 1,6 fois plus grand, en ajoutant l'eau pour la préparation du matériau hydraté,
- mélanger par ajout au matériau hydraté après séchage d'un agent moussant, de préférence du bicarbonate de sodium, en une quantité de 0,25 à 0,6 partie en poids à une partie en poids du matériau hydraté,
- mélanger par ajout du ciment en tant que composant de liaison en une quantité de 6,7 à 11,1 parties en poids du ciment à une partie en poids du matériau hydraté et de l'agent moussant pour la préparation d'un liant,
- ajouter un matériau d'expansion au liant dans une proportion de 2 à 12 unités en volume du matériau d'expansion, à une unité en volume du liant, et
- mélanger le matériau obtenu avec de l'eau supplémentaire jusqu'à une consistance homogène, puis le laisser se solidifier ou l'amener à se solidifier.

2. Procédé selon la revendication 1, dans lequel l'huile végétale est de l'huile de lin ayant une teneur en matière sèche végétale de 28 à 38 % en poids et le solvant est un alcool dénaturé ou une cétone.

3. Procédé selon la revendication 1 ou la revendication 2, dans lequel la chaux vive en une quantité de 75 à 90 % en poids est trempée avec une quantité de 10 % à 25 % en poids de l'émulsion.

4. Procédé selon l'une quelconque des revendications 1 à 3, dans lequel du bicarbonate de sodium est utilisé comme un agent moussant en une quantité de 0,3 à 0,4 partie en poids à une partie en poids du matériau hydraté.

5. Procédé selon l'une quelconque des revendications 1 à 4, dans lequel l'émulsion est appliquée à la chaux vive en pulvérisant une émulsion atomisée sur de la chaux vive brute se déplaçant le long d'une bande de convoyage.

6. Procédé selon la revendication 1, dans lequel l'agent moussant et le composant de liaison sont mélangés par ajout au matériau hydraté en deux étapes consécutives, l'agent moussant étant mélangé par ajout en premier, puis le composant de liaison.

7. Procédé selon la revendication 1, dans lequel le matériau d'expansion est une charge organique ou inorganique non impliquée dans une réaction chimique avec le liant, ladite charge étant un papier fibreux et/ou granulaire, de la paille, de la cellulose ou un matériau caoutchouc, ou une matière plastique, ou un mélange de ceux-ci.

8. Procédé selon la revendication 7, dans lequel le matériau d'expansion est constitué de billes de polystyrène qui sont ajoutées dans une proportion de 4 à 6 unités en volume des billes de polystyrène, à une unité en volume du liant.

9. Procédé selon la revendication 1, dans lequel le matériau obtenu mélangé avec ladite eau supplémentaire est coulé dans un moule prédéterminé, et laissé se solidifier ou amené à se solidifier à une température de 22 à 80 °C, de préférence 40 à 50 °C.

10. Procédé selon la revendication 1, dans lequel le matériau de construction solidifié a une densité de masse de 80 à 900 kg/m³.

11. Plâtre d'isolation thermique, qui est fait d'un matériau de construction produit par le procédé selon la revendication 1.

12. Béton léger d'isolation thermique, qui est fait d'un matériau de construction produit par le procédé selon la revendication 1.

13. Elément de construction d'isolation thermique ou élément de construction auxiliaire, qui est fait d'un matériau de construction produit par le procédé selon la revendication 9.
